# EUROPEAN PATENT APPLICATION

(11) **EP 1 477 067 A1**
(43) Date of publication of application: **17.11.2004**
(21) Application number: 03011241.1
(22) Date of filing: 16.05.2003
(51) Int. Cl.: A22C 11/10, A22C 11/12

(54) **Tying machine for food products**

(71) Applicant: Antonio Borgo & C. S.A.S., 36016 Thiene (Vicenza) (IT)
(72) Inventor: Borgo, Antonio, 36016 Thiene (Vicenza) (IT)
(74) Representative: Grünecker, Kinkeldey, Stockmair & Schwanhäusser Anwaltssozietät

(57) **Abstract**

A tying machine for the preparation of stuffed products containing a paste such as, sausages, salamis or the like, but also salami containing vegetables, said machine comprising a pair of jaws adapted to crimp a casing stuffed with said paste and tying means adapted to form one or more ties of a string in correspondence of the crimped portions. Moreover, the machine according to the present invention comprises advancing means adapted to advance the stuffed products in a predefined advancing direction. In particular, said advancing means comprises a main body adapted to be reciprocated in said predefined advancing means and adapted to receive the stuffed products, and gripping means received inside said main body and adapted to alternatively exert a grip on said stuffed products.

## Description

The present invention relates to the preparation of food products. In particular, the present invention relates to the preparation of stuffed food products. In more detail, the present invention relates to a tying machine for the preparation of stuffed food products containing meat or vegetables such as, for example, salami, sausages, wurstels but also soya salamis or the like.

### DESCRIPTION OF THE PRIOR ART

It is known that traditional stuffed products such as salami and sausages or so-called "cacciatori" are prepared by filling a tubular food casing with a paste containing meat, salt and seasonings. In particular, the food casing may be a casing originating from animals, or a rubber or synthetic casing, for instance, containing collagen. During the stuffing operation, the stuffed casing is squeezed or crimped at regular intervals or at predefined positions and ties are applied by winding a string or cord several times around the crimped portions. In this way, the stuffed casing is separated into discrete links, with two adjacent or consecutive links being connected by a crimped portion or, in other words, a chain of discrete links is formed. When the stuffed food products are sealed or consumed, a predefined number of them may be separated from the chain by cutting the chain in correspondence of a crimped portion.

During the years, with the purpose of meeting and/or accomplishing the exigencies of the consumers, the producers of stuffed products were oriented towards a production system allowing the realization of slightly elongated crimped portions between two consecutive links, i.e., between two consecutive sausages or salamis. In particular, elongated crimped portions have been formed of a length comprised substantially between 10 to 30 millimeters depending on the circumstances, with "double" ties formed on the elongated crimped portions, i.e., with ties or knots formed in proximity of both extremities of each elongated crimped portion. This is substantially due to the fact that elongated crimped portions allow to simplify the separation of two consecutive discrete links. In fact, when such an elongated crimped portion is cut in the middle, the ties at both ends of the elongated crimped portion are not cut as in the case of "simple" or "short" crimped portions. On the contrary, elongated crimped portions may be cut without cutting or damaging the ties at both ends of a crimped portion. Moreover, the risk is avoided that the food casing in proximity of the end portions of the sausages be damaged during separation of two consecutive adjacent sausages. This represents a very important advantage since the stuffed products may be better stored and seasoned once they have been separated. On the contrary, the quality of the stuffed product would be compromised if the ties would be cut or the casing would be damaged or open during separation of two consecutive sausages.

A further advantage offered by elongated crimped portions relate to the fact that the chains of stuffed products normally comprise a predefined number of discrete links, usually between 5 and 10 but also till 20 and more. Accordingly, the provision of elongated crimped portions allows the chains to be better handled by the operators. For instance, the chain may be better rolled up without running the risk that the end portions of the discrete links be squeezed, thus reducing or compromising the quality of the stuffed products. Moreover, it is avoided that two consecutive links come into direct contact, thus warranting a very good storage and seasoning of the stuffed products.

Several automatic and/or semi-automatic tying machines are known in the prior art for the preparation of stuffed food products such as sausages and/or salami. In particular, tying machines are known which are adapted to be supplied or fed with a tubular food casing stuffed or filled with a meat paste. The known tying machines are adapted to subsequently exploit the crimping operation and to apply ties by winding a string or cord on the crimped portions so as to separate the stuffed tubular case into a chain of discrete links, wherein two adjacent links are connected by an elongated crimped portion having the shape and the dimension of a little stalk.

For instance, the European patent application EP 0865732 discloses a tying machine comprising a conduit adapted to be fed with a stuffed tubular casing and a spool placed in proximity of the inlet portion of said conduit. In particular, the spool is adapted to be rotated around the conduit, so that each rotation of the spool results in a winding of the string being formed on the tubular casing. Moreover, the known tying machine comprises two pairs of jaws adapted to crimp or squeeze the filled casing and placed one upstream with respect to the other into the direction of feeding of the tubular casing. The pair of jaws placed upstream is fixed i.e., may not be reciprocated and is disposed outside the conduit. On the contrary, the pair of jaws placed downstream may be reciprocated and is disposed inside the conduit.

During operations, once a portion of casing has been stuffed and introduced into the conduit, both pairs of jaws are closed so as to form a first crimp. Subsequently, a first tie is wrapped once or several times around the crimp between the two pairs of jaws with a string or cord. As will become more apparent in the following, the position of said first tie corresponds to the downstream end portion of the elongated crimped portion to be realized, i.e., to the end portion of the elongated crimped portion placed downstream in the direction of feeding of the tubular casing. Then, both pairs of jaws are maintained in their closed position and the displaceable pair of jaws is translated into the direction of feeding of the casing, so as to pull or trail the casing thus forcing the casing to pas through the fixed pair of jaws. In this way, an elongated crimped portion is formed. In fact, the distance covered by the displaceable pair of jaws corresponds to the predefined length of the elongated crimped portion. Finally, a second tie is formed in proximity of the fixed pair of closed jaws, that is in proximity of the end portion of the elongated crimp portion placed upstream in the direction of feeding of the tubular casing.

The tying machine described above is affected by several disadvantages.

For instance, the general structure of the machine is rendered quite complex by the fact that two pairs of jaws are needed. It results therefore that assembling the machine is a quite difficult and time consuming operation and that the maintenance of the machine is also difficult and complex. Moreover, the pair of jaws inside the feeding conduit may obstruct the conduit so as to prevent the tubular casing from advancing within the conduit, with the risk that the tubular casing may get broken or damaged.

A further tying machine of the kind disclosed above is known from the European patent application EP 00 109 962 filed by the applicant of the present application. In particular, said second tying machine is equipped with a single pair of jaws which may be reciprocated together with a spool along the direction of feeding of the stuffed tubular casing. A first tie is realized by gathering or closing the jaws so as to crimp the casing and subsequently winding a string or a cord once or more times around the first crimp. Subsequently, the jaws are maintained in their closed position and are translated together with the spool in the direction of feeding of the tubular casing. In particular, the jaws are translated along a predefined distance so as to pull or remove a predefined portion of tubular casing from the stuffing horn of the stuffing machine. The jaws are then opened and translated back to the initial position together with the spool. Finally, the jaws are gathered or closed once again so as to form a second crimp and a second tie is formed in correspondence to said second crimp.

This tying machine is also not free from disadvantages.

For instance, the fact that the jaws and the spool are reciprocated together, slows down the tying operation. In fact, in the case of this machine, the elongated crimped portions are realized by crimping the food casing at two different positions placed at a distance corresponding to the length of the elongated crimped portions.

Moreover, the elongated crimped portions are not completely empty or free from meat paste but may contain small quantities of meat paste. In particular, this is due to the fact that the two crimps at both ends of the elongated crimped portions are executed on a tubular casing which may be at least partially filled with meat paste.

In view of the situation as described above, it would be desirable to provide a machine for the preparation of food products allowing to overcome or at least limit the disadvantages affecting the prior art machines. In particular, it would be desirable to provide a tying machine for tying stuffed products allowing to overcome the disadvantages of the prior art tying machines described above.

### SUMMARY OF THE PRESENT INVENTION

In general, the present invention relates to a machine or a device for the preparation of food products. In particular, the present invention relates to a machine for the preparation of stuffed food products such as salami, sausages or similar stuffed products containing meat, as well as stuffed products containing vegetables such as for example soya salami or the like. In more detail, the present invention relates to a tying machine for tying stuffed products allowing to realize strong ties, so that the compactness of the stuffed product is improved and the needs of the consumer are met.

In the machine according to the present invention, the stuffed products are automatically centered inside the machine by means of an advancing device allowing the stuffed products to be advanced within the machine. Said advancing device exerts a grip on the stuffed products so as to block or immobilize the stuffed products gently but, at the same time, strongly. It is therefore avoided that the stuffed products are rotated when the string or cord is wound onto the stuffed products during formation of the ties.

The machine according to the present invention, allows the preparation of stuffed products having a predefined shape and a predefined curvature. In fact, by selecting opportunely the position of the feeding conduit it is possible to accentuate or reduce the typical "banana" shape normally conferred to the stuffed products during the preparation. The curvature of the stuffed products may also be determined by selecting or driving the tension of the string.

A further advantage offered by the machine according to the present invention relates to the simple structure of the machine. In fact, the machine according to the present invention comprises a single pair of jaws for crimping the tubular casing. Moreover, the way the levers for actuating the jaws are realized allows to avoid that the levers interfere or come into contact with the stuffed products. Accordingly, the risk is avoided that the stuffed products are damaged by the jaws or by the actuating levers.

Another aspect of the machine according to the present invention has revealed to be particularly advantageous namely, the fact that, in the machine according to the present invention, the tying means have a simple and easy structure. This allows in particular to form very reliable ties, with the string or cord being firmly wound on the tubular casing, thus avoiding the risk that the ties can get untied during the operations subsequent to the stuffing operation, for instance, during the packaging operations and/or during the seasoning of the stuffed products.

Finally, the general structure of the machine according to the present invention allows to simplify the tying operations, thus reducing the risk of breakdowns, failures, falls or troubles during the tying operations. Accordingly, the working time is reduced and the preparation yields are improved, leading to low costs for the preparation of the stuffed products.

To this end, according to a first embodiment, the present invention relates to a tying machine for the preparation of stuffed products as claimed in independent claim 1, namely a tying machine for tying stuffed products containing a paste by means of a string or cord. Said tying machine comprises tying means adapted to wind a portion of a string or cord on a tubular casing stuffed with said paste and advancing means adapted to advance said stuffed products in a predefined advancing direction. Moreover, said advancing means comprise a main body adapted to receive said stuffed products. Said main body comprises a first inlet aperture adapted to receive said stuffed products and a second aperture adapted to discharge said stuffed products. The main body is adapted to be reciprocated in said predefined advancing direction and comprises means adapted to exert a grip on said stuffed products so as to trail said stuffed products when reciprocated in the predefined advancing direction.

According to a preferred embodiment, the present invention relates to a machine as claimed in claim 2, namely a machine wherein the gripping means comprise means received within the main body, wherein the volume of the gripping means may be alternatively varied so as to alternatively exert a grip on the stuffed products inside the main body, thus, allowing the stuffed products to be alternatively trailed by the main body and left free to be moved with respect to the main body.

According to a further preferred embodiment, the present invention relates to a machine as claimed in claim 4, namely a tying machine wherein the tying means comprise rotating means adapted to be rotated by actuating means. Moreover, said tying means comprise a container adapted to contain a predefined quantity of said string and adapted to release predefined portions of said string. Said container is firmly fixed to said rotating means, so that when said rotating means are rotated a predefined portion of string is released and wound on the casing.

According to another preferred embodiment, the present invention relates to a machine as claimed in claim 10, namely a tying machine comprising means adapted to crimp the tubular casing.

According to other preferred embodiments, the present invention relates to tying machines as claimed in the dependent claims.

Finally, the present invention relates to a system as claimed in claim 20, namely a system for the production of stuffed food products comprising a stuffing machine for the preparation of a paste and adapted to omit a tubular casing filled with said paste and a tying machine according to the present invention.

### BRIEF DESCRIPTION OF THE DRAWINGS

Further advantages, objects and features of the present invention will become more apparent with the following detailed description of some preferred embodiments when taken with reference to the accompanied drawings in which identical or corresponding parts are identified by the same reference numerals. In particular,
Figure 1 represents a schematic lateral view of a particular embodiment of the tying machine according to the present invention in combination with a stuffing machine adapted to emit a tubular casing filled with a paste;
Figure 2 represents a schematic enlarged lateral view of a preferred embodiment of the tying machine according to the present invention.
Figure 3 represents a top view in partial section of the tying machine depicted in Figure 2;
Figures 3a and 3b relate respectively to a lateral view of restraining means and to a sectional view of the centrifugal means comprised in the tying machine according to the present invention;
Figures 3c and 3d relate respectively to an enlarged view of the elastic body of the gripping means with which the tying machine according to the present invention may be equipped and to a sectional view of said gripping means;
Figures 4a and 4b relate to corresponding. frontal views of the jaws of the tying machine according to the present invention, with said jaws being depicted in their open and closed position, respectively;
Figure 5 represents a schematically enlarged view of the levers provided in the tying machine according to the present invention for actuating the crimping jaws;
Figure 6 represents an enlarged view of the tying means and the advancing means of the tying machine according to the present invention;
Figure 7 represents a lateral view of the tying machine of the present invention from the side of the stuffing machine;
Figures 8a and 8b represent respectively a lateral view and a top view of a detail of a further preferred embodiments of the tying machine according to the present invention;
Figures 9a and 9b represent respectively a lateral view and a sectional view of a detail of a further embodiment of the tying machine according to the present invention.

### DETAILED DESCRIPTION OF THE PRESENT INVENTION

While the present invention is described with reference to the embodiments as illustrated in the following detailed description as well as in the drawings, it should be understood that the following detailed description as well as the drawings are not intended to limit the present invention to the particular illustrative embodiments disclosed, but rather that the described illustrative embodiments merely exemplify various aspects of the present invention, the scope of which is defined by the appended claims.

In the following, a first embodiment of the tying machine for food products according to the present invention would be described with reference to the Figures.

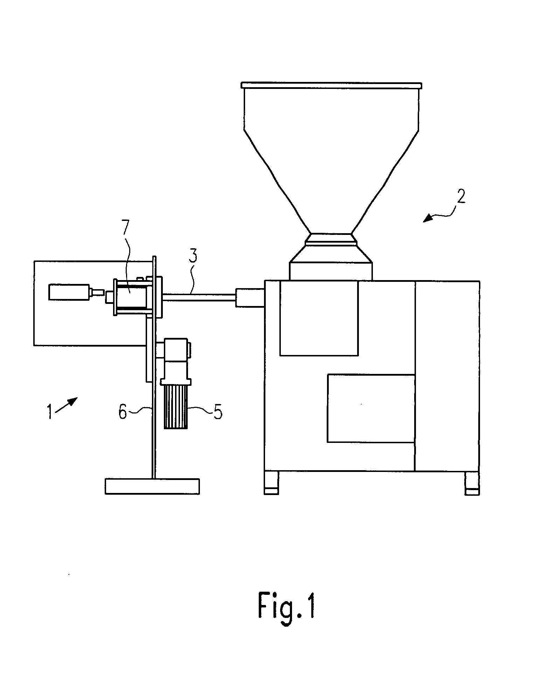

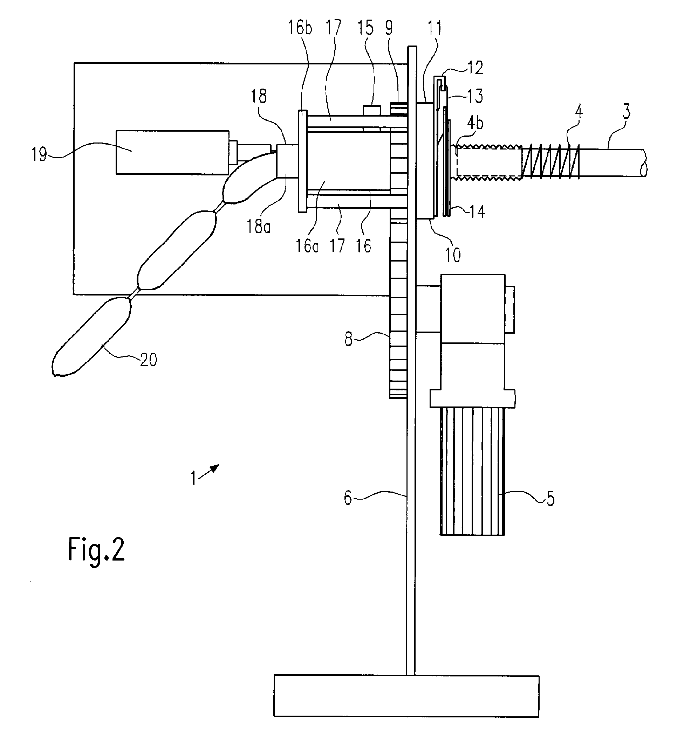

In Figures 1 and 2, the tying machine is identified by the reference numeral 1 and is depicted in combination with a stuffing machine 2. In particular, the tying machine 1 and the stuffing machine 2 are depicted in the reciprocal position in which they are disposed during the operations for preparing stuffed products. The stuffing machine 2 is of the kind adapted to prepare a paste, for instance a paste containing meat. However, the tying machine according to the present invention may also be used in combination with a stuffing machine adapted to prepare a paste containing vegetables or other products, for instance in the case in which it is requested to prepare food products containing soya or gluten.

As depicted in Figures 1 and 2, the stuffing machine 2 comprises a stuffing or feeding horn or tube 3 adapted to emit the paste prepared within the stuffing machine. Alternatively, according to an embodiment which will be described in the following, the feeding tube or horn 3 may belong to the tying machine 1. A tubular casing 4, for instance, a casing originating from animals is placed over the feeding tube 3 or fitted onto the feeding tube 3 like a sock. However, depending on the kind of stuffed products to be prepared, a different casing may be used, for instance, a synthetic casing containing collagen, a rubber casing or any other suitable casing. During the operations for preparing the stuffed products the paste prepared within the stuffing machine 2 is emitted through the mouth 4b of the feeding tube 3 so as to be stuffed or introduced into the casing 4 previously placed over the feeding tube. As will become apparent from the following description, in the case of the tying machine depicted in Figures 1 and 2, i.e., in the case in which the feeding tube 3 belongs to the stuffing machine 2, the tying machine 1 is positioned with respect to the stuffing machine 2 in a position allowing the tying machine to receive the tubular casing 4 filled with the paste or, in other words, in a position allowing the tying machine to be fed with the filled casing.

For reason of clarity, the direction in which the paste exits the stuffing machine through the feeding tube 3 (from right to left in Figures 1 and 2) will be referred to in the following as the feeding direction of the tying machine. In particular, the tying machine 1 is positioned with its inlet placed in proximity of the exit mouth 4b of the feeding tube 3, or in other words, in such a position that the paste exiting from the stuffing machine through the feeding tub 3 fills or stuffs the tubular casing 4 so that the casing is introduced into the tying machine 1. The tubular casing is progressively removed or taken off from the feeding tube 3 and the operations are prosecuted till the whole casing has been stuffed and removed from the tube 3. Once the whole casing has been stuffed the operations are temporarily stopped and a new casing 4 is placed over or fitted onto the tube 3. To this end, the tying machine and the stuffing machine 2 are moved away from each other so as to allow the user to place a new casing 4 over the tube 3. With a new casing 4 placed over the tube 3 the tying machine 1 is moved again close to the stuffing machine in the working position and the preparation for preparing the stuffed products are started again.

The tying machine 1 comprises a support wall 6 adapted to receive the principle component parts of the tying machine, in particular tying means 7 and driving means 5, for instance, an electrical motor 5 adapted to actuate the tying means 7. It has however to be noted that any suitable different driving means may be provided to this end. For instance, a hydraulic motor may be used or any other driving means between those known to the skilled person.

In the following, with reference to Figure 2, some further details of the tying machine according to the present invention will be described.

As anticipated above, the supporting wall 6 is adapted to receive driving means 5, for instance, an electrical motor. In the particular embodiment depicted in Figure 2, the motor 5 is placed on the side of the vertical wall 6 facing the stuffing machine 2 (please note the feeding tube 3).

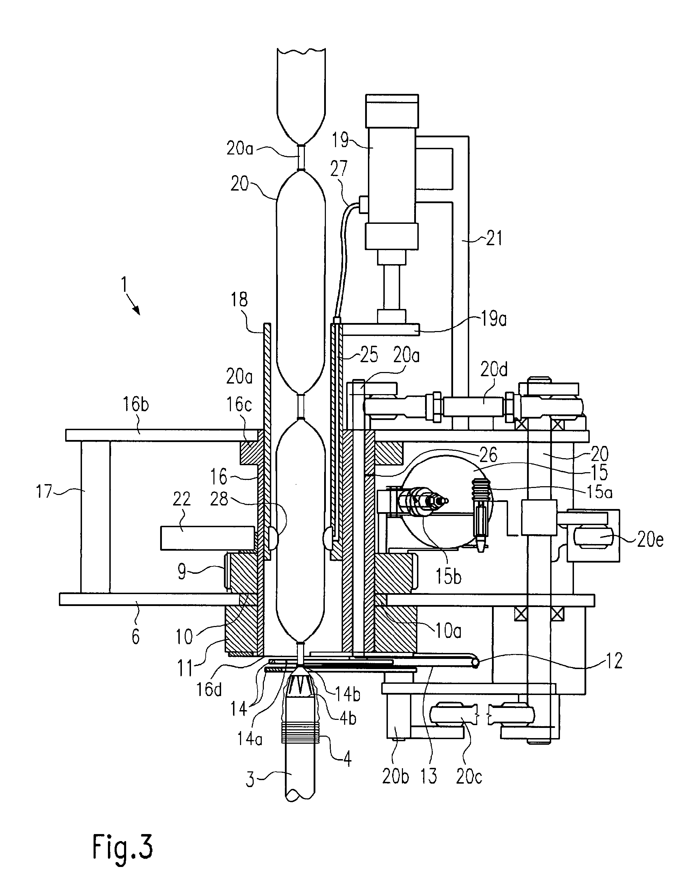

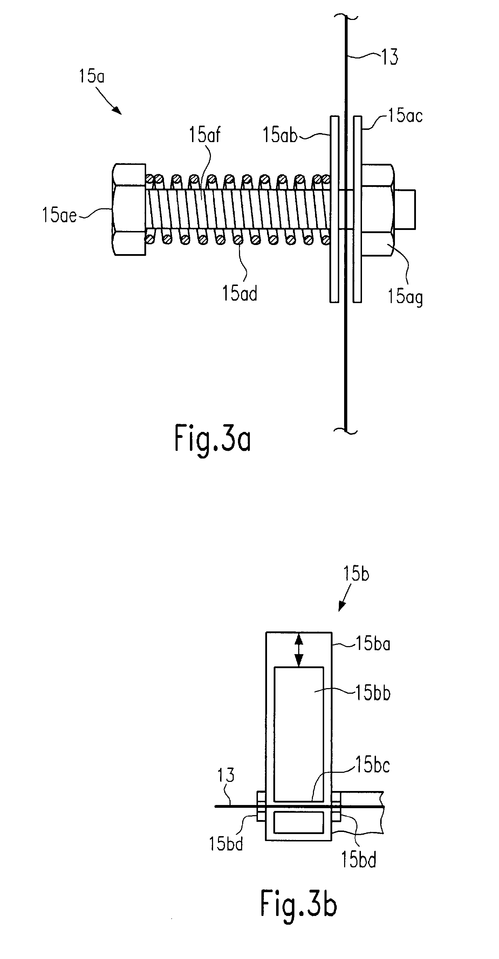

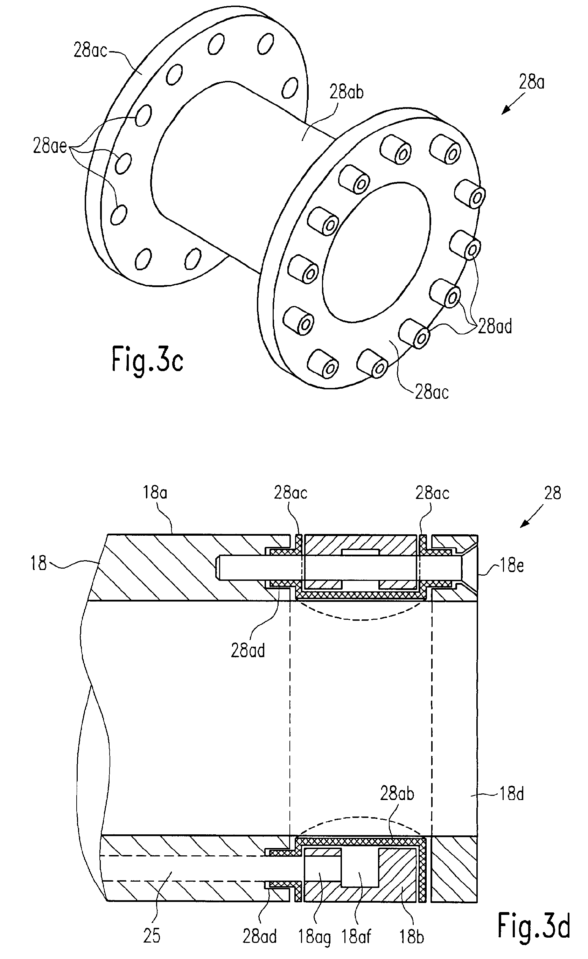

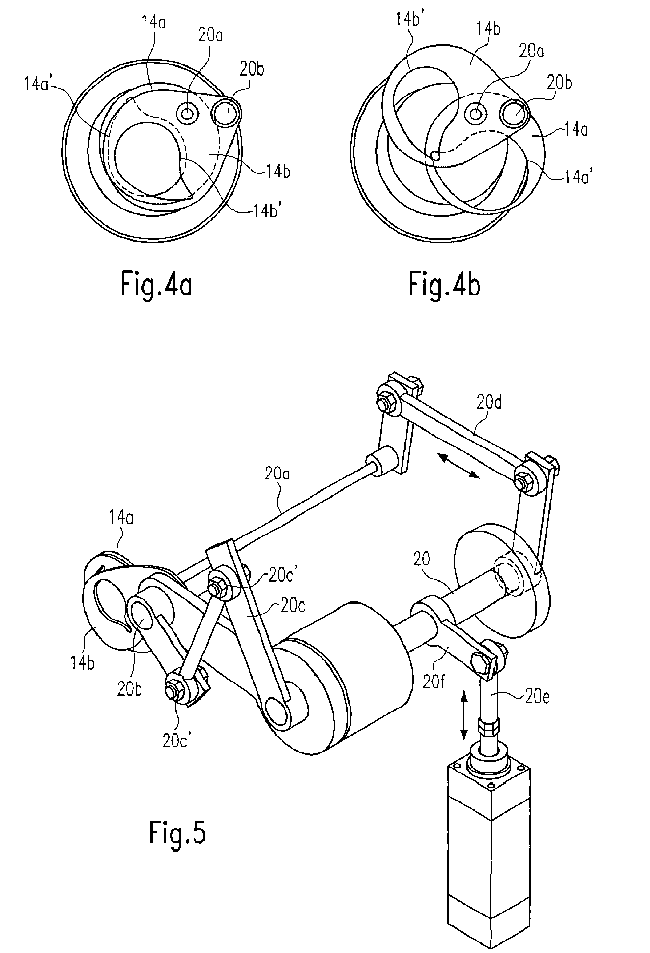

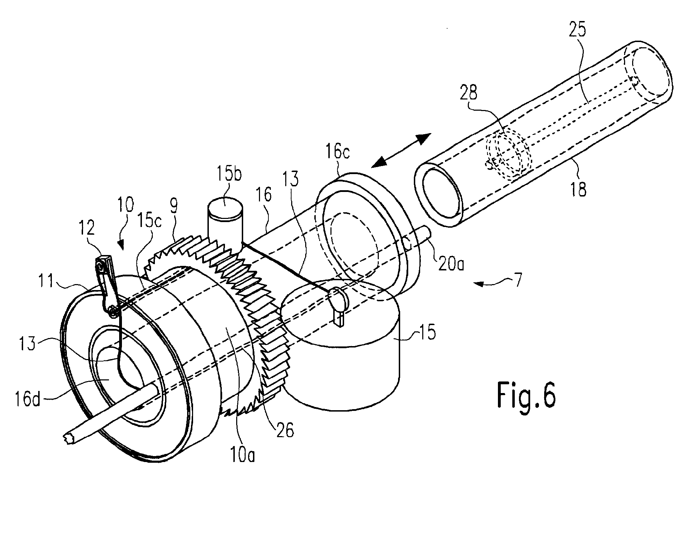

The electrical motor 5 is connected to a first gear 8 by means of driving means (not depicted in Figure 1) adapted to this scope. The gear 8 is adapted to be rotated on its own central pinion (not depicted in Figure 1) received in a through hole (also not depicted in Figure 1) of the supporting wall 6. The gear 8 is located on the side of the wall 6 opposite the side on which the motor 5 is placed and is adapted to engage a second gear 9. The second gear 9 belongs to the rotatable means 10 which will be described in more detail in the following with reference to Figures 3 and 6 and which belong to the tying means 7. It appears therefore clearly that, when the gear wheel 8 is rotated by the motor 5, the second gear wheel 9 is also rotated together with the rotatable means 10 and the tying means 7. It has however to be noted that different driving means other than the gears 8 and 9 may be provided for the purpose of rotating the rotating means 10. For instance, the gears 8 and 9 may be substituted by a driving belt or any other system adapted to this end along those known to the skilled persons. The rotating means 10 comprise a flange 11 integral with or firmly fixed to the gear 9. On this flange there is provided a mechanism 12 adapted to drive or guide the string 13 till in proximity of the inlet area of the tying machine 1. Furthermore, in Figure 2 there are schematically depicted two jaws 14. Said jaws 14, which will be described in more detail in the following with reference to Figures 4a, 4b and 5 are adapted to crimp or squeeze the tubular casing 4 filled or stuffed with a paste before the stuffed casing is entered into the tying machine 1. It has to be noted that the string 13 is guided by the guiding mechanism 12 between the jaws 14. The string 13 or a predefined quantity or portion of it is contained or received in a container 15 adapted to this end and integral with or firmly fixed to the rotating means 10. In particular, the container 15 is firmly fixed to the gear 9 (see also Figures 3 and 6). It will therefore be clear to those skilled in the art that the rotation transmitted by the motor 5 to the gear 8 allows the tying means 7 to be rotated. In particular, the tying means 7 comprise the rotatable means 10 (namely the gear 9 and the flange 11 integral with the gear 9) as well as the container 15 and the guiding mechanism 12. It is therefore apparent that due to the rotation transmitted by the motor 5 to the gear 8 and, consequently, to the gear 9, a predefined portion of string or cord 13 is wound on the filled casing 4 in a position situated between the jaws 14 and in correspondence of the crimp formed by the jaws 14 so that a tie is formed.

As will become more apparent from the description relating to Fig. 3, the rotating means 10 are received in a second cylindrical through hole (not depicted in Fig. 2) formed in the vertical wall 6; in this way, the rotating means 10 may be rotated on their longitudinal axis that substantially corresponds or substantially runs parallel to the longitudinal axis of the feeding tube 3. In particular, the rotating means 10, comprising essentially the gear 9 and the flange 11 firmly fixed to said gear 9, are adapted to be rotated on a body 16 (in the following, also referred to as secondary body) having an external cylindrical surface 16a. As will become more apparent from the following description relating to Fig. 3, the secondary body 16 is firmly fixed to the vertical wall 6 so as to avoid that the secondary body 16 may be rotated during rotation of the rotating means 10.

A main body 18 is received within the secondary body 16 in such a way that the main body 18 may be reciprocated within the secondary body 16. The main body 18 may be reciprocated in a direction which runs substantially parallel to the feeding direction of the tying machine; in particular, the main body 18 may be reciprocated by means of actuating means 19, for instance, by means of pneumatic actuating means opportunely connected to the main body 18. Alternatively, the main body 18 may be reciprocated within the secondary body 16 by means of different actuating means, for instance, by means of an electrical motor connected to a gear or by means of any other system adapted to this end along those known to the skilled persons.

As will become more apparent from the following description, the main body 18 is adapted to pull the stuffed products 20 during its reciprocating motion in the feeding direction of the tying machine, so as to forward the stuffed products 20 in the feeding direction of the tying machine (from right to left in Fig. 2).

In the following, further details of a preferred embodiment of the tying machine according to the present invention will be described with reference to Fig. 3. In Fig. 3, those parts of the machine already described with reference to Figs. 1 and 2 are identified by the same reference numerals.

As depicted in Fig. 3, the tying machine 1 is positioned with respect to the feeding tube 3 in a position suitable for allowing the jaws 14 to crimp or squeeze the stuffed casing exiting from the feeding tube 3. In particular, the pair of jaws 14 is placed in correspondence and/or in proximity of the exiting mouth 4b of the feeding tube, in a position between the exiting mouth 4b of the tube 3 and the inlet aperture 16d of the secondary body 16 facing the feeding tube 3. The inlet aperture of the secondary body is the aperture placed upstream in the feeding direction of the tying machine. Moreover, the jaws 14 are substantially aligned with both the mouth 4b of the tube 3 and said inlet aperture 16d of the secondary body 16. In this way, as will become more apparent in the following from the detailed description of the jaws, the tubular casing is entered into the tying machine 1 through apertures provided in each of the jaws.

From Fig. 3 it is possible to better understand the reciprocal position of the different component parts of the tying machine.

For example, it clearly appears from Fig. 3 that the rotating means 10 comprising essentially the gear 9 and the flange 11 firmly fixed to the gear 9 are received in a through aperture of the vertical wall 6. In particular, to this end the gear 9 is firmly fixed to the flange 11 by means of a connecting portion 10a, with said connecting portion 10a having an external diameter which is smaller or less than the external diameter of the gear 9 and of the flange 11 (see also Fig. 6). The external surface of the connecting portion 10a is adapted to be engaged with the internal surface of the through aperture of the vertical wall 6 in which the rotating means 10 are received; in this way, the rotating means 10 may be rotated within the through aperture of the vertical wall 6.

The container 15 containing a predefined portion or quantity of string or cord 13 is fixed to the gear 9 of the rotating means 10 so that the container 15 is rotated during rotation of the rotating means 10. Means are also provided for the purpose of controlling the tension of the string 13 exiting the container; said means comprise substantially braking or retaining means 15a firmly fixed to the cover of the container 15 as well as centrifugal means 15b firmly fixed to the flange 11. Said retaining means 15a will be described in the following together with said centrifugal means 15b with reference to Figs. 3a and 3b.

As schematically depicted in Fig. 3a, the retaining means 15a comprise essentially a main threaded pin or bolt 15af, with a nut 15ae engaged or screwed on one end of the bolt and a nut 15ag engaged or screwed on the opposite end of the bolt 15af. Moreover, a coil spring 15ad and a pair of washers 15ab and 15ac are placed over the bolt 15af; the string 13 is forced to pass through the washers 15ab and 15ac. It therefore clearly appears that the spring 15ad exerts a pressure on the washer 15ab or, in other words, the washer 15ab is pushed by the coil 15ad toward the washer 15ac. The washer 15ab exerts therefore a pressure on the string 13 between the washers 15ab and 15ac, or, in other words, the string is compressed between the two washers 15ab and 15ac. The pressure exerted on the string 13 avoids that the string, during the tying operation, may freely slide between the two washers so as to freely exit the container 15. On the contrary, the pressure exerted on the string allows to opportunely regulate the tension of the string exiting the container, depending on the circumstances and/or the exigencies. In particular, to this end, the tension of the string is regulated by opportunely acting on the nut 15ae so as to decrease or increase the pressure exerted by the spring 15ad on the washer 15ab.

The centrifugal means 15b (Fig. 3b) comprise essentially a hollow container 15ba of a substantially cylindrical shape, in which a body 15bb is received; in particular, the body 15bb may freely reciprocate within the container 15ba in the direction of the arrow in Fig. 3b. The container 15ba comprises two apertures 15bd provided in the bottom portion of the container for the purpose of allowing the string 13 to enter and to exit the container, respectively. The body 15bb comprises a through aperture or a through conduit 15bc. The string 13 enters the centrifugal means 15b through the inlet aperture 15bd of the container 15ba, proceeds through the through conduit 15bc of the body 15bb, and exits the centrifugal means 15b through the outlet aperture 15bd of the container 15ba. In the rest position depicted in Fig. 3b (this position is assumed when the rotating means are not rotated) the body 15bb lies on the bottom of the container 15ba so that the through conduit 15bc of the body 15bb is substantially aligned with the apertures 15bd of the container 15ba. In this way, no pressure or friction is exerted on the string 13, but the string 13 may slide freely through the centrifugal means 15b. On the contrary, during the tying operations, namely when the rotating means 10 are rotated, the centrifugal force exerted on the body 15bb pushes the body 15bb within the container 15ba in the direction of the arrow of Fig. 3b toward the cover of the container 15ba (at the top of Fig. 3b). In this way, the through conduit 15bc is no longer aligned with the apertures 15bd. It therefore clearly appears that the string 13 may no longer freely slide through the centrifugal means 15b, but is guided through a set course due to the misalignment of the conduit 15bc with respect to the apertures 15bd. In this way, a friction is exerted on the string 13 so that the string is maintained under tension.

Again with reference to Fig. 3, it clearly appears that the string 13 exiting the container 15 is further guided until it is in proximity to the inlet area of the tying machine 1. In particular, this is obtained by means of further guiding means 15c, which will be described in more detail in the following with reference to Fig. 6. From this position in proximity to the inlet area of the tying machine 1, the string is captured by a mechanism 12, firmly fixed to the flange 11 of the rotating means 10, so as to be guided until it reaches the space between the jaws 14. It therefore clearly appears that when the rotating means 10 are rotated, the container 15 is rotated as well so that the string exiting said container 15, adequately guided by the guiding means 15c and the by the mechanism 12, is wound on the tubular casing 4 exiting the tube 3 in a position between the jaws 14. Moreover, the retaining or braking means 15a and the centrifugal means 15b allow that the string be adequately tensioned during rotation of the rotating means so that the string may be firmly wound on the tubular casing so as to realize a predefined number of windings which are reliable and which will last long during the time.

From Fig. 3 it clearly appears that a counterweight 22 is firmly fixed to the gear 9; the purpose of said counterweight 22 is that of counterbalancing the imbalance due to the container 15 during rotation of the rotating means 10.

It also clearly appears from Fig. 3 that the rotating means 10 are adapted to receive the end portion of the secondary body 16 placed upstream in the feeding direction of the tying machine 1. To this end, the secondary body 16 (or at least its end portion upstream in the feeding direction) is provided with an external cylindrical surface 16a,(see Fig. 2) which is substantially adapted to be engaged with the internal cylindrical surface of the rotating means 10. In this way, the rotating means 10 may freely rotate on the secondary body 16. On the contrary, the secondary body 16 is not rotated. In fact, the end portion of the secondary body 16 downstream in the feeding direction of the tying machine or, in other words, the end portion of the secondary body 16 opposed to the end portion received in the rotating means 10, is provided with a flange 16c adapted to be engaged with a plate 16b so that the secondary body 16 is firmly fixed to said plate 16b (for instance, by means of screws not depicted in the figures or, alternatively, by means of other fixing means such as welding or the like known to those skilled in the art). Moreover, the plate 16b is firmly fixed to the vertical wall 6 by means of rigid bars 17 (see also Fig. 2). It therefore results that the secondary body 16 is firmly fixed to the vertical wall 6, thus avoiding that the secondary body 16 may be rotated during rotation of the rotating means 10.

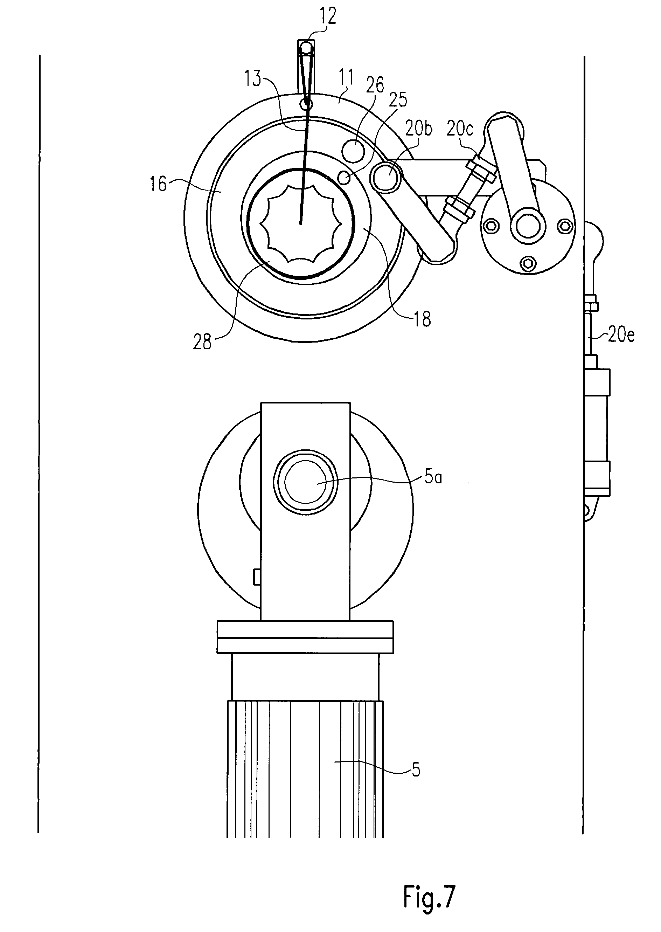

As depicted in Fig. 3 (and as will be further clarified in the following with reference to Figs. 6 and 7), a main body 18 is received within the secondary body 16 in such a way that the main body 18 may be reciprocated within the secondary body 16. To this end, the main body 18 is provided with an external surface adapted to be engaged with the internal surface of the secondary body 16. In the embodiments depicted in the figures, the secondary body 16 and the main body 18 have an internal surface and an external surface that are substantially cylindrical; it should, however, be noted that the secondary body 16 and the main body 18 may be realized so as to have an internal surface and an external surface, respectively, of a different shape; for instance, the main body 18 and the secondary body 16 may be realized with an internal surface and an external surface, respectively, having a square perimeter or a hexagonal perimeter or the like.

The main body 18 is adapted to be reciprocated within the secondary body 16 by means of actuating means 19, for instance, by means of pneumatic actuating means 19. However, other actuating means may be provided to this end, such as, for example, mechanical or hydraulic actuating means. The actuating means 19 are connected to the end portion of the main body 18 placed downstream in the feeding direction of the tying machine by means of connecting means 19a. In a similar way, the actuating means 19 are firmly fixed to the plate 16b by means of supporting means 21, for instance by means of metallic plates or the like.

The supporting means 21 are realized in such a way so as to position the actuating means 19 in a position adapted to allow the actuating means to translate and/or reciprocate the main body 18 within the secondary body 16. As anticipated in the above disclosure given with reference to Fig. 2, the main body 18 is adapted to trail or pull the stuffed products 20 inside the main body during its reciprocating motion in the feeding direction of the tying machine 1. To this end, the main body 18 is equipped with internal gripping means 28, adapted to exert a grip on the stuffed products 20 inside the main body 18 so as to trail or pull the stuffed products 20 while the main body 18 is translated in the direction of feeding of the tying machine 1. In particular, when the main body 18 is displaced in the direction of feeding of the tying machine 1 (from the bottom to the top in Fig. 3), the gripping means 28 are actuated so as to exert a grip on the stuffed products inside the main body. Accordingly, the stuffed products are trailed or pulled by the main body 18 during its motion. On the contrary, when the main body is displaced back in the direction contrary to the direction of feeding of the tying machine 1 (from the top to the bottom in Fig. 3), the gripping means 28 are not actuated so that no grip is exerted by the gripping means on the stuffed products inside the main body. In this way, the main body 18 may be freely moved with respect to the stuffed product so as to reach a predefined position within the secondary body 16. According to a preferred embodiment, the gripping means 28 essentially comprise a body of a rubber material, such as, for example, gum, resins, silicon or the like, adapted to be alternatively inflated and deflated with air or gas or to be filled or emptied with a liquid. The increase in volume of the rubber body arising either from the inflation of air or gas or the introduction of liquid into the rubber body results in a light pressure exerted on the stuffed products 20 inside the main body by the rubber body so that a light grip is exerted on the stuffed products. In this way, the stuffed products are trailed or pulled by the main body 18 when the main body is displaced in the feeding direction of the tying machine 1. On the contrary, when liquid or air or gas are removed from inside the rubber body, the volume of the rubber body decreases and no grip is exerted any longer on the stuffed products 20 inside the main body, but the stuffed products are rendered free from any pressure or grip. In this way, the main body 18 may be displaced back contrary to the direction of feeding of the tying machine, without trailing or pulling the stuffed products 20. Accordingly, a trailing system for trailing the stuffed products 20 is obtained, according to which the stuffed products are alternatively trailed or pulled according to little steps in the direction of feeding of the tying machine (from the bottom to the top in Fig. 3).

As will become more apparent in the following the distance covered by the main body during a translation step in the direction of feeding of the tying machine corresponds to the length of the elongated crimped portions 20a which are formed between two adjacent or consecutive links or singular stuffed products (20). The length of the translation steps may be selected by means of adequate electronic control means (not depicted in the Figure). It results therefore that elongated crimped portions of different lengths may be formed, depending on the circumstances and so as to meet the wishes of the consumers.

The air or gas or liquid is introduced into the gripping means 28 (and removed from the same) by means of a conduit 25 which is in turn connected to a vacuum device by means of a flexible tube 27. The vacuum device or any other means adapted for producing compressed air or gas may be realized in combination with the pneumatic actuating means 19. The conduit 25 is formed in the wall of the main body 18. To this end, the wall of the main body 18 has a non-constant thickness (see also Fig. 7) so that the conduit 25 may be realized or formed in the portion of wall having a higher thickness (the portion of the wall on the right side of Fig. 3).

In the following, a preferred embodiment of the gripping means 28 will be described with reference to Figs. 3c and 3d.

As anticipated above, the gripping means 28 comprise a body 28a of a rubber material. In particular, as schematically depicted in Fig. 3c, said body 28a comprises a main portion 28ab having a substantially cylindrical shape; two disk-shaped flanges 28ac extend from the opposite sides of the main portion 28ab so as to give to the rubber body 20a the shape of a tubeless tyre or, in other words, a toroidal shape. Several hollow cylindrical bodies 28ad, normally nine cylindrical hollow bodies, extend from both flanges 28ac; said cylindrical hollow bodies 28ad are placed in correspondence of corresponding through holes 28ae formed on both flanges 28ac so that the inside of the cylindrical hollow bodies 28ad is brought into communication with said through holes 28ae; as will become apparent in the following, the cylindrical hollow bodies 28ad and the through holes 28ae are provided for the purpose of allowing the rubber body 28a to be received within the main body 18 and also for the purpose of allowing liquid or gas to be introduced into and removed from the gripping means 28.

In particular, as schematically depicted in Fig. 3d, the flanges 28ac of the rubber main body 28a are received within the wall of the displaceable main body 18. To this end, the main body comprises a first and a second portion 18a and 18d, with a ring 18b being inserted between the said first and second portions 18a and 18d; one of the flanges of the rubber body 28a is inserted between the first portion 18a of the main body 18 and the ring 18b; the other flange 28ac of the rubber body 28a is inserted between the ring 18b and the second portion 18d of the main body 18. The several component parts or portions of the main body 18, that is the first portion 18a, the ring 18b and the second portion 18d are kept in the reciprocal position depicted in Fig. 3d by means of screws 18e, so that the main body 18 is adapted to receive the rubber body 28a. In particular, said screws 18e are received in corresponding through holes provided in the second portion 18d, in the ring 18b of the main body 18 and in the cylindrical hollow bodies 28ad of the rubber body 28a; the screws 18e engage corresponding threaded holes provided in the first portion 18a of the main body (18). Normally eight screws 18e are used, with said screws 18e being received in corresponding apertures of the first and second portion of the main body and of the ring 18b; the eight screws are also received within corresponding eight hollow cylindrical bodies 28ad of the rubber body 28. One of the nine hollow cylindrical bodies 28ad of the rubber body 28a is brought into communication with the conduit 25 formed in the wall of the main body 18 for the introduction or remotion of the liquid or gas into and from the rubber body 28a. In particular, it appears clearly from Fig. 3d, that a groove 18af is formed in the internal surface of the ring 18b of the main body 18, with said groove 18af communicating through a hollow cylindrical conduit 18ag and through a hollow cylindrical body 28ad with the conduit 25. The space defined by the groove 18af and the cylindrical portion 28ab of the rubber body 28 is adapted to receive the liquid or gas introduced through the conduit 25. The liquid or gas introduced into said space pushes the cylindrical portion 28ab of the rubber body towards the inside of the main body 18 (as indicated by the dashed line in Figure 3d) so that the rubber body exerts a pressure, and therefore a grip, on the stuffed products inside the main body 18. For the purpose of speeding up the operations, the conduit 25 may be connected to a vacuum device so that the liquid or gas may be introduced into and removed from the gripping means (28) more quickly.

Still with reference to Fig. 3, it appears clearly that the tying machine according to the present invention is equipped with a pair of jaws 14 placed in correspondence of the inlet of the tying machine or, in other words, in correspondence of the inlet aperture 16d of the secondary body 16 and substantially in a position facing the feeding tube 3 of the stuffing machine. The pair of jaws 14 is provided for the purpose of crimping or squeezing the stuffed tubular casing. Whilst a detailed description of the jaws will be given in the following with reference to Figs. 4a and 4b, it has to be noted at this point of the disclosure that the jaws 14 are actuated by a pair of bars 20a and 20b, respectively, adapted to be rotated on their own longitudinal axis. In particular, the jaw 14b disposed upstream in the direction of feeding of the tying machine is firmly connected to a first bar 20b which is adapted to be rotated on its own axis. In the same way, the jaw 14a disposed downstream in the direction of feeding of the tying machine is firmly connected to a second bar 20a, which is also adapted to be rotated on its own axis. It appears clearly from Fig. 3 that the rotatable bar 20a is received in a seat or housing 26 formed in the wall of the secondary body 16. To this end, in the same way as in the case of the main body 18, the wall of the secondary body 16 has a non-constant thickness, so that the seat or housing 26 may be formed in that portion of the wall of the secondary body 16 having the higher thickness (the right portion in Fig. 3).

The rotatable bar 20a is rotated by means of a lever 20d; the rotatable bar 20b is rotated by means of several lever 20c. The lever 20d and the levers 20c are actuated by a third rotatable bar 20 adapted to be rotated by actuating means 20e, for instance by pneumatic actuating means but also by hydraulic or mechanic actuating means or the like. The third rotatable bar 20 is positioned between the vertical wall 6 and the plate 16b.

In the following, the function of the pair of jaws 14 will be described with reference to Figs. 4a, 4b and 5.

As depicted in detail in Figs. 4a and 4b, the jaws 14a and 14b comprise essentially two metal plates firmly fixed to the rotatable bars 20a and 20b, respectively. Moreover, the plates of the jaws 14a and 14b comprise apertures 14a' and 14b', respectively. Said apertures have substantially the shape of an eye or a drop, that is with an enlarged portion and a small portion communicating with each other. The jaw 14a is adapted to be rotated in a counter clockwise direction by means of the rotatable bar 20a; to the contrary, the jaw 14b is adapted to be rotated in a clockwise direction by means of the rotatable bar 20b. In particular, the jaws 14a and 14b may be rotated between two predefined positions. In the position depicted in Fig. 4a, (in the following also referred to as open position) the enlarged portions of the apertures 14', 14b' of the jaws 14a and 14b are substantially aligned; in this way, the tubular casing exiting the tube 3 is pushed through the apertures 14a' and 14b' of the jaws 14a and 14b, respectively. To the contrary, in the position represented in Fig. 4b (in the following also referred to as closed position) the small portions of the apertures 14a and 14b are aligned. In this way, when the jaws 14 are rotated from the open position to the closed position, the tubular casing 4 is squeezed or crimped by the jaws 14a and 14b.

The rotation of the jaws 14a and 14b, respectively in a counter clockwise and clockwise direction, is obtained as follows.

As schematically depicted in Fig. 5, the actuator 20e is connected to the rotatable bar 20 by means of a connecting bar 20f. In particular, the actuator 20e comprises a bar or piston adapted to be reciprocated in the vertical direction. It will be therefore apparent to a person skilled in the art that when the piston is actuated from the bottom to the top the rotating bar 20 is rotated counter clockwise; to the contrary, when the piston 20e is actuated from the top to the bottom, the rotating bar 20 is rotated clockwise. When the rotating bar 20 is rotated counter clockwise, the lever 20d is displaced from right to left in Fig. 5. In this way, the bar 20a is also rotated counter clockwise together with the jaw 14a. Simultaneously, the levers 20c, which do not comprise a singular lever but a system of three levers connected by two articulations 20c', is closed so that the rotating bar 20b is rotated together with the jaw 14b in a clockwise direction. To the contrary, when the actuator 20e is actuated from the top to the bottom in the scheme depicted in Fig. 5, the rotating bar 20 is rotated in a clockwise direction. Accordingly, the rotating bar 20a and the jaw 14a are rotated in a clockwise direction whilst the rotating bar 20b and the jaw 14b are rotated in a counter clockwise direction.

In the following, some further details of the tying means 7 of the tying machine according to the present invention will be described with reference to Fig. 6. In Fig. 6, those parts already described with reference to other figures are identified by the same reference numerals.

As schematically depicted in Fig. 6, the main body 18, equipped with the gripping means 28 and the conduit 25 formed in its wall, is adapted to be received within the secondary body 16. In turn, the portion of the secondary body 16 placed upstream in the direction of feeding of the tying machine (the left portion in Fig. 6) is received within the rotating means 10. Said rotating means 10, comprise the gear 9, the flange 11 and the connecting portion 10a and are adapted to be rotated on the secondary body 16. It appears clearly from Fig. 6 that the connecting portion 10a has a diameter which is smaller than the diameter of the gear 9 and the flange 11. As already explained with reference to Fig. 3, the external surface of the connecting portion 10a is adapted to be engaged with the internal surface of a through aperture formed in the vertical wall 6 of the tying machine 1. Moreover, as anticipated above, when the rotating means 10 are rotated, the container 15 fixed to the gear 9 is also simultaneously rotated, so that a string 13 exiting the container 15 is wound on the casing in correspondence of the crimped portions previously formed. It is also to be noted that the guiding means for guiding the string 13 comprise braking or retaining means 15a and centrifugal means 15b (not depicted in Fig. 6), together with a through conduit 15c formed through the gear 9, the connecting portion 10a and the flange 11. In this way, the string or cord to 13 is guided from the container 15 until a region in proximity of the inlet aperture 16d of the secondary body 16 i.e. the aperture placed upstream in the direction of feeding of the tying machine. At the exit of the conduit 15c, the string is captured by a mechanism 12 allowing the string 13 to be wound on the tubular casing when the rotating means 10 is rotated. Since the string is adequately tensioned by the braking means 15a and by the centrifugal means 15b, the string 13 may be strongly wound on the tubular casing. Accordingly, ties or knots are formed which are durable and reliable, thus avoiding the risks that the ties or knots come untied accidentally.

In Fig. 6 it is also depicted the rotatable bar 20a for the rotation of the jaw 14a; as apparent from the Figure the bar 20a is received in a seat or housing 26 formed in the wall of the secondary body 16.

In the following, the reciprocal position of the principal component parts of the tying machine according to the present invention will be further clarified with reference to Fig. 7.

As schematically depicted in Fig. 7, the driving means 5, for instance an electrical motor, are fixed to the vertical wall 6. Connecting means 5a connecting the driving means 5 to the gear 8 (not depicted in Figure 7) are received in a hole (also not depicted in the Fig.) formed in the vertical wall 6. The gear 8 is placed on the opposite side of the vertical wall 6 with respect to the motor 5.

It appears clearly from Fig. 7 that the secondary body 16 is received within the rotating means 10 (only the flange 11 of the rotating means 10 is depicted in Fig. 7). In the same way, it appears clearly from Fig. 7 that the main body 18 is received within secondary body 16. The inflatable gripping means 28 are received within the main body 18, with a conduit 25 being formed in the wall of the main body for allowing air, gas or liquid to be introduced into or removed from the gripping means 28. In Fig. 7 there is also depicted the seat or housing 26 adapted to receive the rotatable bar 20a for rotating the jaw 14a (neither the bar 20a nor the jaw 14a are depicted in Fig. 7). Finally, in Fig. 7 there are depicted actuating means 20e for rotating the bar 20, i.e. for actuating the levers and bars connected to the jaws 14a and 14b; also depicted in Fig. 7 are the bar 20b and the levers 20c for the rotation of the jaw 14b.

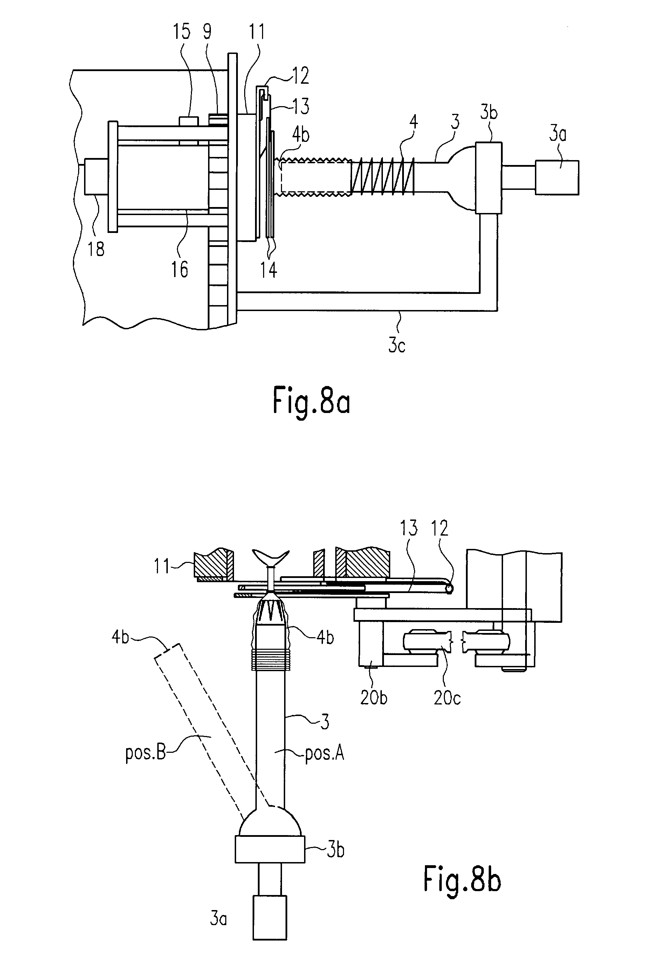

In the following, a preferred embodiment of the tying machine according the present invention will be described with reference to Figs. 8a and 8b. In particular, according to the embodiment schematically depicted in Figs. 8a and 8b, the feeding tube 3 for emitting the paste prepared inside the stuffing machine does not belong to the stuffing machine (as in the case of the embodiment described with reference to Figs. 1 to 3 but belongs to the tying machine 1. To this end, as depicted in 8a, the feeding tube 3 is fixed to the vertical wall 6 of the tying machine 1 by means of supporting means 3c. Moreover, the feeding tube 3 is adapted to be connected to the stuffing machine 2. To this end, the feeding tube 3 comprises connecting means 3a allowing the feeding tube 3 to be connected with the stuffing machine 2. For instance, a threaded sleeve 3a may be provided to this end, with said threaded sleeve being adapted to be connected with a tube (not depicted in the figure) of the stuffing machine 2. According to the embodiment depicted in Figs. 8a and 8b, an articulation 3b is provided on the tube 3, allowing the end portion 4b of the tube 3 to be displaced between a first working position (position A of Fig. 8b) and a second standby position (position B depicted in dashed line in Fig. 8b). In the working position, the end portion 4b of the tube 3 is disposed in proximity of the inlet of the tying machine 1. During the tying operations, the feeding tube 3 is kept in the working position A of Fig. 8b, so that the paste exiting the tube 3 fills the casing 4 placed over the feeding tube 3 and pushes the filled casing into the tying machine 1. The tubular casing is then continuously removed from the tube 3 and the preparation of the stuffed products prosecute until the whole casing has been used. Once the casing 4 is finished, the operations are temporally stopped and a new casing is placed over the tube 3. To this end, the feeding tube 3 is displaced acting on the articulation 3b into the standby position B of Fig. 8b and a new casing is placed over the tube 3. Once a new casing has been placed over the tube 3, the tube 3 is displaced back acting on the articulation 3b into the working position A of Fig. 8b, so that the end portion 4b of the tube 3 is placed again in proximity of the tying machine 1 and the preparation of the stuffed product can be started again. The embodiment described above has the advantage that there is no need to move the tying machine and the stuffing machine away from each other for the purpose of placing a new casing over the feeding tube. On the contrary, the stuffing machine and the tying machine are kept connected to each other by means of the connecting means 3a and it is possible to place a new casing over the feeding tube 3, simply displacing the tube. This solution allows the working time to be further reduced.

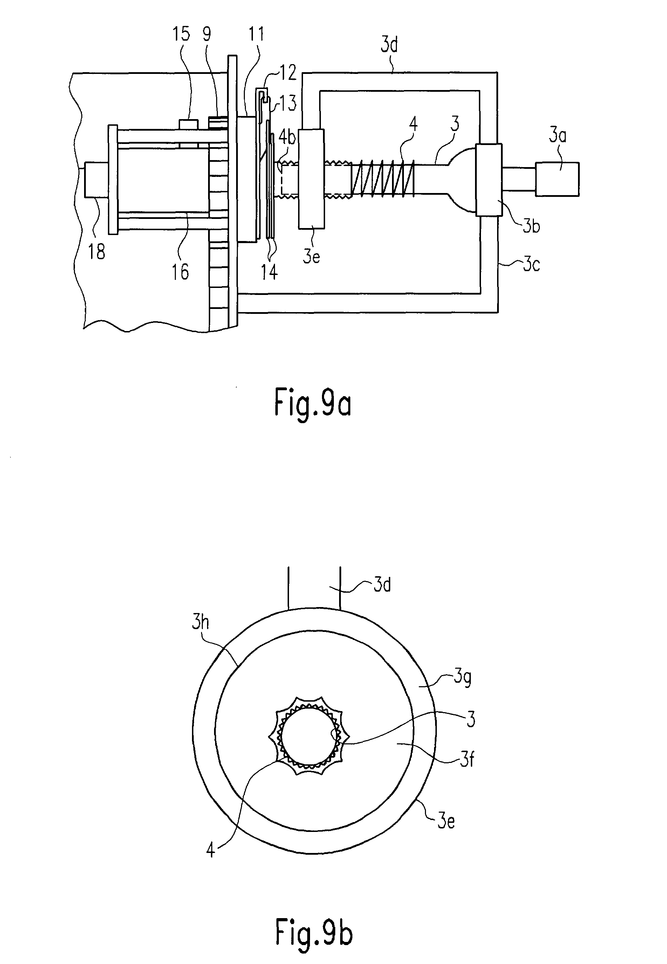

In the following, with reference to Figs. 9a and 9b, a further preferred embodiment of the tying machine according to the present invention will be described.

In the embodiment schematically depicted in Figs. 9a and 9b control and/or braking means 3e are provided for the purpose of controlling and/or driving the removal or taking off of the tubular casing 4 from the feeding tube 3. Said control means 3e are firmly fixed to the articulation 3b of the tube 3 by means of fixing means 3d and are positioned in proximity to the end portion or exit mouth 4b of the tube 3. In particular, as depicted in Fig. 9b, said control means comprise a main body 3g with a through aperture 3h adapted to receive the feeding tube 3 with the casing 4 placed over the tube. Gripping means 3f are provided inside the aperture 3h, with said gripping means 3f being adapted to exert alternatively a pressure on the casing 4 placed over the tube 3. For example, said gripping mean 3f may comprise an element of rubber material such as gum, resin, silicon or equivalent materials and may be substantially similar to the gripping means 28 described with reference to Figs. 3, 3c and 3d. In particular, the gripping means 3f are adapted to be alternatively inflated or deflated with air or gas. Alternatively said gripping means 3f may be adapted to be alternatively filled with and emptied from a liquid. To this end, the gripping means 3f are connected through a conduit (not depicted in the figures) with a vacuum system (also not depicted in the figures). When gas or liquid is introduced in the gripping means 3f, the volume of said gripping means 3f increases and a controlled pressure is exerted on the casing 4 placed over the tube 3 so that the removal of the casing from the tube may be adequately controlled. Controlling means (not depicted in the figures) are also provided for driving the operation of the gripping means so as to synchronize the action of the gripping means with the other operations of the tying machine. The embodiment described above has the advantage that the casing may be better filled or stuffed with the paste. In particular, the embodiment described above avoids air being trapped within the casing, thus not allowing air-pockets to form which could compromise or reduce the quality of the stuffed products. On the contrary, the embodiment described above allows the preparation of stuffed products, characterized by a casing without wrinkles, creases or the like.

In the following, the operation of the tying machine according to the present invention will be described with reference to figure 3.

As anticipated above, a tubular casing 4 is placed like a sock over the feeding tube 3. Said feeding tube may either belong to a stuffing machine adapted to prepare a meat paste or to the tying machine, and is adapted to emit said paste through an exit mouth 4b.

The paste exiting the feeding tube 3 fills the casing 4 and pushes the filled or stuffed casing forward into a direction substantially parallel to the direction in which the paste exits the tube (direction of feeding of the tying machine).

The filled or stuffed casing is pushed into the tying machine 1, in particular, into the main body 18 through the jaws 14a and 14b which have been previously placed in their open position, namely, with the enlarged portions of the apertures 14a' and 14b' aligned as depicted in Fig. 4a. During a first step, once a first predefined portion of the casing has been filled and pushed into the tying machine (into the main body 18) the jaws 14a, 14b are closed, i.e., the jaws are rotated into the closed position of Fig. 4b, so as to bring the small portions of their apertures 14a' and 14b' into alignment. In this way, the casing 4 is squeezed or crimped by the jaws. Subsequently, the tying means are actuated, i.e., the rotating means 10 are rotated a predefined number of times so that a predefined number of windings of the string 13 is formed on the casing 4 in correspondence of the crimped portion. In this way a first tie or knot is formed. As will become more apparent in the following, said first tie is realized in correspondence of the end portion of the elongated crimped portion to be formed, placed downstream in the direction of feeding of the tying machine. Subsequently, the gripping means 28 are actuated (the rubber body 20a is inflated through the conduit 25) so that a grip is exerted on the stuffed product 20 inside the main body 18. Substantially simultaneously, the main body is translated or displaced into the direction of feeding of the tying machine by means of the actuating means 19, with the body 18 trailing or pulling in its motion the stuffed products 20 gripped by the gripping means 28. During the trailing of the stuffed products 20 due to the translation of the main body 18 in the direction of the feeding of the tying machine, the jaws 14a and 14b are kept in their closed position schematically depicted in Fig. 4b. In this way, a predefined portion of the casing 4 is forced to pass through the closed jaws 14. The length of said predefined portion substantially corresponds to the distance covered by the main body 18 during its translating motion in the feeding direction of the machine. Accordingly, an elongated crimped portion 20a is formed of a length corresponding to the distance covered by the main body during its translatory motion.

The rotating means 10 are then again rotated a predefined number of times so that the string 13 is again wound a predefined number of times around the crimped casing. In this way, a second tie or knot is formed in correspondence of the end portion of the elongated crimped portion placed upstream into the direction of the feeding machine.

Once the second tie has been formed, the jaws 14a, 14b are opened and the gripping means 28 are deactivated so as to leave the stuffed products free of any grip. In particular, air, gas or liquid previously introduced within the gripping means 28 is removed through the conduit 25 so that the gripping means are deflated and the volume decreases.

The gripping means 28 having been deactivated, the main body 18 is displaced back by means of the actuating means 19 in a direction contrary to the tying machine's feeding direction. A second portion of casing 4 is then filled or stuffed and pushed into the main body 18 through the open jaws 14a, 14b and the operations are prosecuted by closing the jaws and forming a new tie. Once a first crimp has been formed, the operations are prosecuted according to the sequence described above.

It has been verified that the tying machine according to the present invention allows to reach or obtain the goals posed, overcoming the disadvantages affecting the prior art machines. In fact, the tying machine according to the present invention allows forming durable and reliable ties, thus increasing the compactness of the stuffed products so as to meet the exigencies and wishes of the consumers.

In the tying machine according to the present invention, the stuffed products are automatically centered inside the machine since the advancing means for advancing the stuffed products exert a light, but strong grip on the stuffed products, thus avoiding that the stuffed products are rotated when the string is wound on the stuffed products during formation of the ties.

The machine according to the present invention allows also to increase or decrease the curvature of the stuffed products so as to meet the wishes and/or exigencies of the consumer; in particular, this is obtained by selecting the reciprocal position of the feeding tube and the advancing means and/or by opportunely selecting the tension of the string.

A further advantage offered by the machine according to the present invention relates to the fact that the overall structure of the machine is very simple; in fact, the machine according to the present invention comprises a single pair of jaws for crimping or squeezing the casing; moreover, the way the levers for actuating the jaws are realized allows to avoid that the levers interfere or come into contact with the stuffed products, thus avoiding the risk that the stuffed products are damaged or broken by the jaws or levers.

The general structure of the tying machine according to the present invention allows to greatly simplify the tying operation, thus reducing the risk of stops, errors, breakdowns, trouble or falls. Accordingly, very high production yields are obtained and the preparation time is strongly reduced. As a result the production costs are reduced as well. In the same way, the cleaning and maintenance operations are also strongly simplified.

Moreover, due to the fact that the tying machine according to the present invention comprises a single pair of jaws, together with the fact that the string or cord is wound on the casing in a position between the jaws, the ties are formed exactly in correspondence of the end portions of the stuffed products, thus avoiding the risk that the end portions of the stuffed products are given an elongated shape, particularly disregarded by the consumers.

The reciprocal disposition of the component parts of the tying machine according to the present invention gives the machine a very good balance, together with a very high stability and handiness. In particular, the embodiment wherein the driving means (the motor) and the tying means are positioned on opposite sides of the vertical wall allows a very good distribution of the weights, this leading to improved stability. It is also possible to protect the driving means and the tying means with corresponding protecting covers fixed to opposite sides of the vertical wall. In this way, the component parts of the tying machine are adequately protected, avoiding that said parts are damaged or broken during preparation of the stuffed products, and also avoiding that the component parts come into contact with the stuffing products or with cleaning products during cleaning and or maintenance operations. In the same way, improved safety is obtained for the operators acting and/or working in proximity of the machine. Finally, all the electric parts such as sensors, switchboards, as well as all the controlling means may be placed inside the protecting covers.

It has to be noted that a wide range of changes and modifications can be made to the embodiments described above without leaving the scope of the present invention. For instance, the articulation of the feeding tube and the controlling means for controlling the removal of the casing from the tube may be provided either singularly or in combination. It therefore has to be understood that all the claims, including all equivalences that are intended to define the scope of the invention.

## Claims

1. A tying machine (1) for tying stuffed products (20) containing a paste by means of a string or cord (13) said machine comprising tying means (7) adapted to wind a portion of said string on a tubular casing (4) stuffed with said paste, said machine further comprising advancing means adapted to advance said stuffed products (20) in a predefined advancing direction, **characterized in that**
said advancing means comprise a main body (18) adapted to receive said products (20), said main body comprising a first inlet aperture adapted to receive said stuffed products and a second aperture allowing said stuffed products to be discharged, said main body being adapted to be reciprocated in said predefined advancing direction and comprising means (28) adapted to exert a grip on said stuffed products so as to trail said stuffed products when reciprocated in the predefined advancing direction.

2. A machine according to claim 1, **characterized in that**
said gripping means (28) comprise means (28a) received within the main body (18), wherein the volume of said means (28a) may be alternatively varied so as to alternatively exert a grip on the stuffed products (20) inside the main body (18), thus allowing the stuffed products to be alternatively trailed by the main body and left free to be moved with respect to the main body.

3. The machine according to claim 2, **characterized in that**
said means (28a) comprise a body of a rubber material received inside the main body (18) so as to define a hollow space (18af) adapted to be alternatively filled with or emptied from a liquid or gas through a conduit (25) formed in the wall of the main body (18).

4. A machine according to one of claims 1-3, **characterized in that**
said tying means (7) comprise rotating means (10) adapted to be rotated by actuating means, and **in that** said tying means comprise a container (15) adapted to contain a predefined quantity of said string (13) and adapted to release predefined portions of said string, with said container being firmly fixed to said rotating means (10) so that when said rotating means (10) are rotated, a predefined portion of string is released and wound on said casing (4).

5. A machine according to claim 4, **characterized in that**
said rotating means comprise a gear (9) and a flange (11) firmly fixed to each other, with said gear (9) being adapted to be rotated by said actuating means.

6. A machine according to one of claims 4-5, **characterized in that**
said container (15) is firmly fixed to said gear (9) and **in that** guiding means are provided for guiding the string (13) from said container (15) to a position in proximity of said casing (4).

7. A machine according to claim 6, **characterized in that**
said guiding means comprise a conduit (15c) formed through said rotating means (10) and a guiding mechanism (12) firmly fixed to the flange (11) for winding the string on the casing 4.

8. A machine according to one of claims 1 - 7, **characterized in that**
said machine comprises means (15a,15b) for controlling the tension of the string (13).

9. A machine according to claim 8, **characterized in that**
said means for controlling the tension of the string comprise braking means (15a) firmly fixed to the container (15) and centrifugal means (15b) fixed to the gear (9).

10. A machine according to one of claims 1 - 9, **characterized in that**
said machine comprises means (14) adapted to crimp the tubular casing (4).

11. A machine according to claim 10, **characterized in that**
said means (14) are adapted to crimp the tubular casing before the tubular casing is introduced into the main body (18) and comprise a pair of jaws (14a,14b) placed one upstream with respect to the other in said predefined advancing direction and in substantial alignment with the main body (18), said jaws comprising two corresponding plates on which corresponding through apertures (14a', 14b') are formed, so as to allow the casing 4 to pass through the jaws.

12. A machine according to claim 11, **characterized in that**
both said apertures (14a', 14b') comprise a main portion and a secondary portion smaller than said main portion, wherein said jaws (14a) and (14b) are adapted to be actuated between a first position in which the two main portions are substantially aligned so that the tubular casing can be passed through the jaws, and a second position in which the two secondary portions are substantially aligned so that the tubular casing is crimped by the jaws.

13. A machine according to one of claims 11 - 12, **characterized in that**
said jaws are firmly fixed to corresponding bars (20a,20b) adapted to be rotated on their own longitudinal axis, with said longitudinal axis being substantially perpendicular to the plane of the inlet aperture of the main body (18), so that when said bars are rotated, said jaws are actuated between said first and said second positions.

14. A machine according to claim 13, **characterized in that**
the jaw (14a) placed downstream in said predefined advancing direction is firmly fixed to a bar (20a) received in a housing (26) formed in the thickness of the wall of the secondary body (16).

15. A machine according to one of claims 13 - 14, **characterized in that**
said first and second bars (20a,20b) firmly fixed to said first and second jaws (14a,14b), respectively, are actuated by levers so that one jaw is rotated clockwise and the other jaw is rotated counterclockwise.

16. A machine according to one of claims 1 -15, **characterized in that**
said machine further comprises a feeding tube (3) over which said casing is placed like a sock, said tube having a first end portion (4a) adapted to be connected with a stuffing machine for preparing a paste and a second end portion (4b) opposed to said first end portion for emitting said paste.

17. A machine according to claim 16, **characterized in that**
said tube (3) comprises an articulation (3b) allowing the end portion (4b) of the tube (3) to be rotated over a predefined angle.

18. A machine according to one of claims 16-17, **characterized in that**
said machine comprises a mechanism (3e) adapted to control the removal of said casing (4) from said tube (3).

19. A machine according to claim 18, **characterized in that**
said mechanism (3e) comprises a rubber body (3f) adapted to be alternatively filled or emptied with a liquid or gas so that the volume of said rubber body (3f) increases when filled so as to exert a pressure on the casing (4) placed over the tube (3).

20. A system for the preparation of stuffed products comprising a stuffing machine (2) for preparing a paste and adapted to emit said paste so as to fill a tubular casing (4) with said paste, the system further comprising a tying machine (1) according to one of claims 1-19.
